(19) Europäisches Patentamt
European Patent Office
Office européen des brevets

(11) EP 4 029 893 A1

(12) EUROPÄISCHE PATENTANMELDUNG

(43) Veröffentlichungstag:
**20.07.2022 Patentblatt 2022/29**

(21) Anmeldenummer: **21151813.9**

(22) Anmeldetag: **15.01.2021**

(51) Internationale Patentklassifikation (IPC):
***C08G 18/48*** (2006.01) ***C08G 18/32*** (2006.01)
***C08G 18/66*** (2006.01) ***C08G 18/76*** (2006.01)
***C08G 18/67*** (2006.01) ***C08G 18/28*** (2006.01)

(52) Gemeinsame Patentklassifikation (CPC):
**C08G 18/48; C08G 18/281; C08G 18/2855; C08G 18/3206; C08G 18/3275; C08G 18/4829; C08G 18/4837; C08G 18/6674; C08G 18/6688; C08G 18/676; C08G 18/7621; C08G 18/7671;**
C08G 2110/0008; C08G 2110/0016;
C08G 2110/0041; (Forts.)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder:
- **Albach, Rolf**
  **51061 Köln (DE)**
- **Gossner, Matthaeus**
  **51061 Köln (DE)**
- **Faerber, Veronica-Alina**
  **51467 Bergisch Gladbach (DE)**
- **Schlecht, Sebastian**
  **40721 Hilden (DE)**
- **Pochorovski, Igor**
  **51467 Bergisch Gladbach (DE)**
- **Lindner, Stefan**
  **42857 Remscheid (DE)**

(74) Vertreter: **Levpat**
**c/o Covestro AG**
**Gebäude 4825**
**51365 Leverkusen (DE)**

(54) **VERFAHREN ZUR REDUKTION VON EMISSIONEN VON POLYURETHANEN**

(57) Die vorliegende Erfindung betrifft ein Verfahren zur Herstellung von Polyurethan-Schaumstoff, wobei die Komponenten
A enthaltend
**A1** Verbindungen mit gegenüber Isocyanat reaktionsfähigen Wasserstoffatomen,
A2 Treibmittel
und gegebenenfalls
A3 Hilfs- und Zusatzstoffe wie
a) Katalysatoren,
b) oberflächenaktive Zusatzstoffe,
c) Pigmente und/oder Flammschutzmittel

und
**B** Di- und/oder Polyisocyanaten,
miteinander umgesetzt werden, dadurch gekennzeichnet, dass mindestens in einer der Komponenten A oder **B** eine Komponente C umfasst, enthaltend
**C1** ein Elektrophil gemäß der Formel (I) enthaltend ist

$$R^1\text{-C(O)-O-CHR}^2R^3 \qquad (I)$$

wobei
$R^1$ und $R^2$ miteinander verbunden sind und ein 5- oder 6-gliedriger Ring gebildet wird,
$R^1$ und $R^2$ jeweils unabhängig voneinander für einen substituierten oder unsubstituierten $C_1$- bis $C_8$-Kohlenwasserstoffrest stehen,



Processed by Luminess, 75001 PARIS (FR)

(Forts. nächste Seite)

$R^3$ für H oder einen substituierten oder unsubstituierten $C_1$- bis $C_8$-Kohlenwasserstoffrest steht, und mindestens eine exozyklische OH-Gruppe an $R^1$, $R^2$ oder $R^3$ gebunden ist,
oder
**C2** ein electrophiles Addukt aus einem dienophilen cyclischen Anhydrid und einem OH-funktionellen Dien.

(52) Gemeinsame Patentklassifikation (CPC): (Forts.)
C08G 2110/0083

## Beschreibung

Die vorliegende Erfindung betrifft ein Verfahren zur Herstellung von Polyurethanen unter Verwendung von emissionsreduzierenden Verbindungen, die erhaltenen Polyurethane selber, die Verwendung der emissionsreduzierenden Verbindungen, sowie eine Mischung enthaltenden diese Verbindungen.

Es ist bekannt, dass in Polyurethanen durch Folgereaktionen die unerwünschte Bildung und Emission von aromatischen Aminen stattfindet. Beide Verbindungen sind als bedenklich für die Gesundheit eingestuft. Für die zulässigen Emissionen gibt es deshalb standardisierte Messmethoden wie die vom Verband Deutscher Automobilhersteller entwickelten Methoden VDA 278 oder die an ursprünglich an der Universität Stockholm entwickelte und nach ihrem Erfinder benannte "Skarping"-Methode. Diese hat mittlerweile auch Weiterentwicklungen erfahren. Zusätzlich gibt es Grenzwerte verschiedenster Organisationen für den Gehalt dieser Verbindungen, welche über die Zeit immer weiter abgesenkt wurden. Es ist deshalb notwendig Additive zu finden, die zu einer Verringerung des Gehaltes an Spuren von aromatischen Aminen im Schaumstoff führen, ohne dabei die mechanischen Eigenschaften der Schaumstoffe zu kompromittieren oder die Emissionen anderer Stoffe in erheblichem Umfang zu erhöhen. Eine Klasse von Verbindungen die diesen Ansprüchen entspricht sind hydroxyfunktionelle elektrophile zyklische Ester wie z. B. Furanone und Morpholindione.

In der Literatur sind Elektrophile zur Verringerung der Emissionen von aromatischen Aminen beschrieben. DE 19919826 und DE 19928676 nutzen als elektrophile Gruppe aza-Michael-Akzeptoren vom Typ $R^2$-CH=CH-C(=O)-O-$R^3$. Die Offenbarungen beschreiben drei hydroxyfunktionelle Elektrophile: Lupragen 9198, Hydroxyethylacrylat, Laromer 8765. DE1034 3099 beschreibt Anhydride als Elektrophile wobei OH-funktionelle Rizinolsäure genutzt wird. Es ist aber nicht erkennbar, ob nach der Synthese des Anhydrids vor dem Verseifen freie NCO-reaktive Hydroxylgruppen im Additiv vorhanden sind oder ob alle OH-Gruppen verestert vorliegen. DE1992 8687 beschreibt mit Butyrolacton, Caprolacton und Decalacton bereits Lactone als Elektrophile zur Verringerung der Aminemissionen. Diese sind alle nicht in das Polymer einbaubar und werden, wenn sie nicht mit Aminen abreagieren, aufgrund ihres geringen Molekulargewichtes zu unerwünschten flüchtigen Kohlenwasserstoffen ("VOC").

Die Aufgabenstellung ist somit die Bereitstellung von Additiven zur Herstellung von Polyurethanen mit guten mechanischen Eigenschaften, die die Gehalte an Spuren von aromatischen Aminen, insbesondere auch die Emission von Aminen reduzieren und gleichzeitig dazu geeignet sind, einen Beitrag zur Verringerung der Gesamtemission zu leisten. Dabei dürfen die mechanischen Eigenschaften der Schaumstoffe nicht erheblich kompromittiert werden.

Gegenstand der vorliegenden Erfindung ist ein Verfahren zur Herstellung von Polyurethan-Schaumstoff, wobei die Komponenten

**A** enthaltend

**A1** Verbindungen mit gegenüber Isocyanat reaktionsfähigen Wasserstoffatomen,
**A2** Treibmittel
und gegebenenfalls
**A3** Hilfs- und Zusatzstoffe wie

a) Katalysatoren,
b) oberflächenaktive Zusatzstoffe,
c) Pigmente und/oder Flammschutzmittel

und
**B** Di- und/oder Polyisocyanaten,
miteinander umgesetzt werden, dadurch gekennzeichnet, dass mindestens in einer der Komponenten **A** oder **B** eine Komponente **C** umfasst, enthaltend

**C1** ein Elektrophil gemäß der Formel (I) enthaltend ist

$$R^1\text{-C(O)-O-CHR}^2R^3 \qquad (I)$$

wobei

$R^1$ und $R^2$ miteinander verbunden sind und ein 5- oder 6-gliedriger Ring gebildet wird,
$R^1$ und $R^2$ jeweils unabhängig voneinander für einen substituierten oder unsubstituierten $C_1$- bis $C_8$-Kohlenwasserstoffrest stehen,
$R^3$ für H oder einen substituierten oder unsubstituierten $C_1$- bis $C_8$-Kohlenwasserstoffrest steht, und

mindestens eine exozyklische OH-Gruppe an $R^1$, $R^2$ oder $R^3$ gebunden ist,

oder

**C2** ein electrophiles Addukt aus einem dienophilen cyclischen Anhydrid und einem OH-funktionellen Dien.

**Komponente A1**

Als Verbindungen mit gegenüber Isocyanat reaktionsfähigen Wasserstoffatomen können beispielsweise Polyole ausgewählt aus der Gruppe bestehend aus Polyetherpolyolen, Polyesterpolyolen, Polyetheresterpolyolen, Polycarbonatpolyolen und Polyether-Polycarbonatpolyolen eingesetzt werden. Bevorzugt sind Polyesterpolyole und/oder Polyetherpolyole. Die Verbindungen der Komponente **A1** können eine Hydroxylzahl zwischen 15 bis 4000 mg KOH/g und eine Funktionalität von 1 bis 8 aufweisen.

Vorzugsweise weist ein erheblicher Teil der Verbindungen der Komponente **A1** ein zahlenmittleres Molekulargewicht von 2000 g/mol bis 15000 g/mol, insbesondere 3000 g/mol bis 12000 g/mol und besonders bevorzugt 3500 g/mol bis 6500 g/mol auf. Werden mehr als nur eine Verbindung der Komponente **A1** verwendet, kann die Mischung aus Verbindungen der Komponente **A1** bevorzugt eine Hydroxylzahl zwischen 20 bis 2000 mg KOH/g, insbesondere 25 bis 100 mg KOH/g aufweisen. Zur Erzielung viskoelastischer Eigenschaften wird die Polydispersität der Polyalkylenoxid-Gemische bevorzugt durch Mischung von Polyalkylenoxiden mit Molekulargewichten von 200 bis 1000 g/mol und Funktionalitäten von 2-6 so verbreitert, dass eine mittlere OH-Zahl des Gemisches von 50-300 mg KOH/g erreicht wird.

"Funktionalität" bezeichnet im Rahmen der vorliegenden Erfindung die theoretische, aus den bekannten Einsatzstoffen und deren Mengenverhältnissen berechnete mittlere Funktionalität (Anzahl an gegenüber Isocyanaten bzw. gegenüber Polyolen reaktiven Funktionen im Molekül).

Die zahlenmittlere Molmasse $M_n$ (auch: Molekulargewicht) wird im Rahmen dieser Erfindung durch Gelpermeationschromatographie nach DIN 55672-1 (August 2007) bestimmt.

Die Polyesterpolyole der Komponente A1 können beispielsweise Polykondensate aus mehrwertigen Alkoholen, vorzugsweise Diolen, mit 2 bis 12 Kohlenstoffatomen, vorzugsweise mit 2 bis 6 Kohlenstoffatomen, und Polycarbonsäuren, wie z. B. Di-, Tri- oder sogar Tetracarbonsäuren oder Hydroxycarbonsäuren oder Lactonen sein, bevorzugt werden aromatische Dicarbonsäuren oder Gemische aus aromatischen und aliphatischen Dicarbonsäuren verwendet. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Als Carbonsäuren kommen insbesondere in Betracht: Bernsteinsäure, Glutarsäure, Adipinsäure, Korksäure, Azelainsäure, Sebazinsäure, Decandicarbonsäure, Tetrahydrophthalsäure, Hexahydrophthalsäure, Cyclohexandicarbonsäure, Tetrachlorphthalsäure, Itaconsäure, Malonsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, Trimellithsäure, Benzoesäure, Maleinsäure, Fumarsäure, Phthalsäure, Isophthalsäure und Terephthalsäure. Verwendet werden können ebenso Derivate dieser Carbonsäuren, wie beispielsweise Dimethylterephthalat. Die Carbonsäuren können dabei sowohl einzeln als auch im Gemisch verwendet werden. Als Carbonsäuren werden bevorzugt Adipinsäure, Sebacinsäure und/oder Bernsteinsäure, besonders bevorzugt Adipinsäure und/oder Bernsteinsäure, verwendet.

Hydroxycarbonsäuren, die als Reaktionsteilnehmer bei der Herstellung eines Polyesterpolyols mit endständigen Hydroxylgruppen mitverwendet werden können, sind beispielsweise Milchsäure, Äpfelsäure, Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxyl-modifizierte Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere, Neopentylglykol oder Hydroxypivalinsäureneopentylglykolester. Vorzugsweise verwendet werden Ethylenglykol, Diethylenglykol, 1,4-Butandiol, 1,5-Pentandiol, 1,6-Hexandiol oder Mischungen aus mindestens zwei der genannten

Diole, insbesondere Mischungen aus 1,4-Butandiol, 1,5-Pentandiol und 1,6-Hexandiol.

Daneben können auch Polyole wie Trimethylolpropan, Glycerin, Erythrit, Pentaerythrit, Trimethylolbenzol oder Trishydroxyethylisocyanurat eingesetzt werden, wobei Glycerin und Trimethylolpropan bevorzugt sind.

Es können zusätzlich auch einwertige Alkanole mit verwendet werden.

Erfindungsgemäß eingesetzte Polyetherpolyole werden nach dem Fachmann bekannten Herstellungsmethoden erhalten, wie beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und/oder Imidazolderivate, unter Verwendung mindestens eines Startermoleküls, das 2 bis 8, vorzugsweise 2 bis 6 reaktive Wasserstoffatome gebunden enthält.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt sind Copolymere des Propylenoxids mit Ethylenoxid. Die Alkylenoxide können in Kombination mit $CO_2$ umgesetzt werden.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 2,2'-, 2,4'- und 4,4'-Diaminodiphenylmethan.

Vorzugsweise verwendet werden zwei oder mehrwertige Alkohole, wie Ethandiol, 1,2- und 1,3-Propandiol, Diethylenglykol, Dipropylenglykol, 1,4-Butandiol, 1,6-Hexandiol, Triethanolamin, Bisphenole, Glycerin, Trimethylolpropan, Pentaerythrit, Sorbit und Saccharose.

Verwendbare Polycarbonatpolyole sind Hydroxylgruppen aufweisende Polycarbonate, zum Beispiel Polycarbonatdiole. Diese entstehen in der Reaktion von Kohlensäurederivaten, wie Diphenylcarbonat, Dimethylcarbonat oder Phosgen, mit Polyolen, bevorzugt Diolen.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenole und lactonmodifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit $CO_2$ erhältlich sind.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit 4 bis 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit 1 bis 4 Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich und kann Vorteile aufweisen, z.B. im Hinblick auf Lagerstabilität der Polyolformulierung, Dimensionsstabilität, Brandverhalten und Druckfestigkeit der Schäume.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Diole wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können alleine oder in Mischung eingesetzt werden.

Neben den Diolen können als Startermoleküle für die Herstellung der Polyether auch Verbindungen mit mindestens 3 Zerewitinoff-aktiven Wasserstoffen, besonders mit zahlenmittleren Funktionalitäten von 3 bis 8, insbesondere

von 3 bis 6 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Als Verbindungen mit gegenüber Isocyanaten reaktionsfähigen Wasserstoffatomen können auch Polymerpolyole, PHD-Polyole und PIPA-Polyole in Komponente A eingesetzt werden. Polymerpolyole sind Polyole, die Anteile von durch radikalische Polymerisation geeigneter Monomere wie Styrol oder Acrylnitril in einem Basispolyol erzeugten festen Polymeren enthalten. PHD (Polyhydrazodicarbonamid)-Polyole werden beispielsweise hergestellt durch in situ Polymerisation eines Isocyanats oder einer Isocyanat-Mischung mit einem Diamin und/oder Hydrazin (bzw. Hydrazinhydrat) in einem Polyol, bevorzugt einem Polyetherpolyol. Bevorzugt wird die PHD-Dispersion hergestellt durch Umsetzung einer Isocyanat-Mischung aus 75 bis 85 Gew.-% 2,4-Toluylendiisocyanat (2,4-TDI) und 15 bis 25 Gew.-% 2,6-Toluylendiisocyanat (2,6-TDI) mit einem Diamin und/oder Hydrazinhydrat in einem Polyetherpolyol hergestellt durch Alkoxylierung eines trifunktionellen Starters (wie beispielsweise Glycerin und/oder Trimethylolpropan). Bei PIPA-Polyolen handelt es sich um durch Polyisocyanat-Polyaddition mit Alkanolaminen-modifizierte Polyetherpolyole, wobei das Polyetherpolyol eine Funktionalität von 2,5 bis 4,0 und eine Hydroxylzahl von 3 mg KOH/g bis 112 mg KOH/g (Molekulargewicht 500 g/mol bis 18000 g/mol) aufweist.

Isocyanat-reaktive Substanzen mit zellöffnender Wirkung können Copolymere aus Ethylenoxid und Propylenoxid mit einem Überschuss an Ethylenoxid oder aromatischen Diaminen wie Diethyltoluylendiamin sein.

Neben den oben beschriebenen Isocyanat-reaktiven Verbindungen können in der Komponente A beispielsweise Graft-Polyole, Polyamine, Polyaminoalkohole und Polythiole enthalten sein. Die beschriebenen Isocyanat-reaktiven Komponenten umfassen auch solche Verbindungen mit gemischten Funktionalitäten.

Für die Herstellung von Polyurethanschaumstoffen im Kaltschaumverfahren werden bevorzugt mindestens zwei Hydroxylgruppen aufweisenden Polyether mit einer OH-Zahl von 20 bis 50 mg KOH/g eingesetzt, wobei die OH-Gruppen zu mindestens 80 Mol-% aus primärem OH-Gruppen bestehen (Bestimmung mittels $^1$H-NMR (z.B. Bruker DPX 400, Deuterochloroform)). Besonders bevorzugt beträgt die OH-Zahl 25 bis 40 mg KOH/g, ganz besonders bevorzugt 25 bis 35 mg KOH/g.

Gegebenenfalls werden zusätzlich in der Komponente A Verbindungen mit mindestens zwei gegenüber Isocyanaten reaktionsfähigen Wasserstoffatomen und einer OH-Zahl von 280 bis 4000 mg KOH/g, bevorzugt 400 bis 3000 mg KOH/g, besonders bevorzugt 1000 bis 2000 mg KOH/g eingesetzt. Hierunter sind Hydroxylgruppen und/oder Aminogruppen und/oder Thiolgruppen und/oder Carboxylgruppen aufweisende Verbindungen zu verstehen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispielsweise können Ethanolamin, Diethanolamin, Triethanolamin, Sorbit und/oder Glycerin eingesetzt werden.

Die Komponente A kann aus einer oder mehreren der oben genannten Isocyanat-reaktiven Komponenten bestehen, bevorzugt enthält die Komponente A mindestens zwei Hydroxylgruppen aufweisenden Polyether, gegebenenfalls in Mischung mit mindestens zwei Hydroxylgruppen aufweisenden Polyestern.

In einer bevorzugten Ausführungsform enthält die Komponente A:

**A1.1** gegenüber Isocyanaten reaktionsfähige Wasserstoffatome aufweisende Verbindungen mit einer OH-Zahl gemäß DIN 53240-1 in der Fassung von Juni 2013 von 15 bis < 120 mg KOH/g
gegebenenfalls

**A1.2** gegenüber Isocyanaten reaktionsfähige Wasserstoffatome aufweisende Verbindungen mit einer OH-Zahl gemäß DIN 53240-1 in der Fassung von Juni 2013 von 120 bis 600 mg KOH/g.
und gegebenenfalls

**A1.3** gegenüber Isocyanaten reaktionsfähigen Wasserstoffatomen aufweisenden Verbindungen mit einer NH- Zahl gemäß DIN 53176 in der Fassung von November 2002 und/oder OH-Zahl gemäß DIN 53240-1 in der Fassung von Juni 2013 von 600 bis 4000 mg KOH/g.

**Komponente A2**

Als Komponente **A2** werden chemische und/oder physikalische Treibmittel eingesetzt.

Als chemisches Treibmittel **A2.1** werden beispielsweise Wasser oder Carbonsäuren und deren Gemische

verwendet. Diese reagieren mit Isocyanatgruppen unter Bildung des Treibgases, wie beispielsweise im Falle von Wasser entsteht dabei Kohlendioxid und im Falle von z. B. Ameisensäure entsteht dabei Kohlendioxid und Kohlenstoffmonoxid. Als Carbonsäure wird bevorzugt mindestens eine Verbindung, ausgewählt aus der Gruppe bestehend aus Ameisensäure, N,N-dialkylcarbaminsäure, Oxalsäure, Malonsäure und Ricinolsäure, eingesetzt. Auch die Ammoniumsalze dieser Säuren sind geeignet. Als chemisches Treibmittel wird besonders bevorzugt Wasser eingesetzt.

Als physikalisches Treibmittel **A2.2** eingesetzt werden beispielsweise niedrig siedende organische Verbindungen wie z. B. Kohlenwasserstoffe, Ether, Ketone, Carbonsäureester, Kohlensäureester, halogenierte Kohlenwasserstoffe. Geeignet sind insbesondere organische Verbindungen, welche gegenüber der Isocyanatkomponente **B** inert sind und Siedepunkte unter 100 °C, vorzugsweise unter 50 °C bei Atmosphärendruck aufweisen. Diese Siedepunkte haben den Vorteil, dass die organischen Verbindungen unter dem Einfluss der exothermen Polyadditionsreaktion verdampfen. Beispiele derartiger, vorzugsweise verwendeten organischen Verbindungen sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch bevorzugt ist der Einsatz von (hydro)fluorierten Olefinen, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en). Auch Gemische zweier oder mehrerer der genannten organischen Verbindungen können verwendet werden. Die organischen Verbindungen können dabei auch in Form einer Emulsion aus kleinen Tröpfchen eingesetzt werden.

In einer besonderen Ausführungsform enthält die Komponente **A2**

**A2.1** 0,1 bis 10 Gew.-Teile, bevorzugt 1 bis 5 Gew.-Tle. (jeweils bezogen auf die Summe der Gew.-Teile aller Komponenten **A** = 100 Gew.-Teile) chemische Treibmittel
und/oder

**A2.2** 0 bis 15 Gew.-Teile (bezogen auf die Summe der Gew.-Teile aller Komponenten **A** = 100 Gew.-Teile) physikalische Treibmittel.

Besonders bevorzugt wird als Komponente **A2** Wasser eingesetzt.

**Komponente A3**

Als Komponente A3 werden Hilfs- und Zusatzstoffe verwendet wie

a) Katalysatoren (Aktivatoren),

b) oberflächenaktive Zusatzstoffe (Tenside), wie Emulgatoren und Schaumstabilisatoren insbesondere solche mit niedriger Emission wie beispielsweise Produkte der Tegostab® LF-Serie,

c) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel, (wie beispielsweise Trikresylphosphat), Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Als Katalysatoren werden bevorzugt aliphatische tertiäre Amine (beispielsweise Trimethylamin, Tetramethylbutandiamin), cycloaliphatische tertiäre Amine (beispielsweise 1,4-Diaza(2,2,2)bicyclooctan), aliphatische Aminoether (beispielsweise Dimethylaminoethylether und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Aminoxide, Harnstoff, Derivate des Harnstoffs (wie beispielsweise Aminoalkylharnstoffe), insbesondere (3-Dimethylaminopropylamin)-harnstoff) und Zinn-Katalysatoren (wie beispielsweise Dibutylzinnoxid, Dibutylzinndilaurat, Zinnoctoat).

Als Katalysatoren werden besonders bevorzugt (i) Harnstoff, Derivate des Harnstoffs und/oder (ii) die oben genannten Amine und Aminoether, dadurch gekennzeichnet, dass die Amine und Aminoether eine funktionelle Gruppe enthalten, die mit dem Isocyanat chemisch reagiert. Vorzugsweise ist die funktionelle Gruppe eine Hydroxyl-Gruppe, eine primäre oder sekundäre Aminogruppe. Diese besonders bevorzugten Katalysatoren haben den Vorteil, dass diese ein stark reduziertes Migrations- und Emissionsverhalten aufweisen. Als Beispiele für besonders bevorzugte Katalysatoren seien genannt: (3-Dimethylaminopropylamin) -Harnstoff, 1,1'-((3-(Dimethylamino) propyl-)imino)bis-2-propanol, N-[2-[2-(dimethylamino)ethoxy]ethyl]-N-methyl-1,3-propanediamin und 3-Dimethylaminopropylamin.

Bevorzugt liegt die Komponente A3 in einem Anteil von 0,5 bis 15 Gew.-Teile, bezogen auf die Summe der Gew.-Teile aller Komponenten A = 100 Gew.-Teile, vor.

**Komponente B**

Als Komponente **B** werden aliphatische, cycloaliphatische, araliphatische, aromatische und heterocyclische Polyisocyanate eingesetzt, beispielsweise solche der Formel (II)

$$Q(NCO)_n \qquad (II)$$

in der

n für eine ganze Zahl zwischen 2 - 4, vorzugsweise 2 oder 3 steht,
und

Q für einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen steht.

Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise werden als Komponente B mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt.

Ganz besonders bevorzugt wird als Komponente **B** eine Diphenylmethandiisocyanat-Mischung eingesetzt, bestehend aus

a) 45 bis 90 Gew.-% 4,4'-Diphenylmethandiisocyanat und
b) 10 bis 55 Gew.-% 2,2'-Diphenylmethandiisocyanat und/oder 2,4'-Diphenylmethandiiso-cyanat und
c) 0 bis 45 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

In einer alternativen ganz besonders bevorzugten Ausführungsform wird als Komponente **B** eine Diphenylmethandiisocyanat-Mischung eingesetzt, bestehend aus

a) 35 bis 45 Gew.-% 4,4'-Diphenylmethandiisocyanat und
b) 1 bis 5 Gew.-% 2,2'-Diphenylmethandiisocyanat und/oder 2,4'-Diphenylmethandiiso-cyanat und
c) 50 bis 64 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

**Komponente C**

Als Komponente **C** können **C1** Elektrophile gemäß der Formel (I) eingesetzt werden

$$R^1\text{-C(O)-O-CHR}^2R^3 \qquad (I)$$

wobei

$R^1$ und $R^2$ miteinander verbunden sind und ein 5- oder 6-gliedriger Ring gebildet wird,
$R^1$ und $R^2$ jeweils unabhängig voneinander für einen substituierten oder unsubstituierten $C_1$- bis $C_8$-Kohlenwasserstoffrest stehen,
$R^3$ für H oder einen substituierten oder unsubstituierten $C_1$- bis $C_8$-Kohlenwasserstoffrest steht,

und

mindestens eine exozyklische OH-Gruppe an $R^1$, $R^2$ oder $R^3$ gebunden ist.

Die Elektrophile gemäß Formel (I) sind ringförmige Ester, die eine exozyklische Hydroxylgruppe aufweisen. Bevorzugt stehen

$R^1$ für -CH=, $-C(R^4)(R^5)-$ oder -C(=O)-,
$R^2$ für -CH=, $-C(R^4)(R^5)-$, $-CH(R^4R^5)-$, $-CH_2-N(R^4R^5)-$,
$R^3$ für H oder $-R^6-R^5$
$R^4$ für H oder $C_1$- bis $C_8$-Alkylrest, besonders bevorzugt H oder $C_1$- bis $C_3$-Alkylrest,
$R^5$ für H oder OH,
$R^6$ für $C_1$- bis $C_8$-Alkylrest, besonders bevorzugt $C_1$- bis $C_3$-Alkylrest.

Besonders bevorzugt enthält der Ring vier Kohlenstoffatome und/oder nicht mehr als einen Sauerstoff und/oder mindestens zwei benachbarte $sp^3$-hybridisierte Kohlenstoffatome. Verbindungen die beispielsweise als Komponente **C1** eingesetzt werden können sind 5-(Hydroxymethyl)-2(*5H*)furanon, 4-(2-Hydroxyethyl)-2,3-morpholindion, 4-(2-Hydroxyproyl)-6-methyl-2,3-morpholindion sowie auch die Copolymere des 2,3- und 2,5-Morpholinedions und seiner Derivate mit Alkylenoxiden, 1,4-Dioxanonen und 1,4-Dioxandionen.

Als Komponente **C** können auch **C2** elektrophile Addukte aus einem dienophilen cyclischen Anhydrid und einem OH-funktionellen Dien eingesetzt werden. Als OH-funktionelle Diene werden beispielsweise konjugiert doppelt ungesättigte C10 bis C20-Carbonsäuren eingesetzt. Bevorzugt ist das dienophile cyclische Anhydrid ungesättigt, beispielsweise kann Maleinsäureanhydrid eingesetzt werden. Besonders bevorzugt wird als Komponente C2 Admerginsäure oder Derivate der Admerginsäure eingesetzt.

Die Einsatzmenge der Komponente C beträgt bevorzugt 0,01 bis 10 Gew.-%, besonders bevorzugt 0,05 bis 5 Gew.-%, jeweils bezogen auf das Gesamtgewicht der Komponenten **A, B** und **C.**

Die Komponente C kann als Mischung mit der Komponente **A** als auch mit der Komponente **B** eingesetzt werden.

Die erfindungsgemäß erhaltenen Polyurethane sind bevorzugt Polyurethanschaumstoffe, besonders bevorzugt Polyurethanweichschaumstoffe oder Polyurethanhalbhartschaumstoffe. Zur Herstellung der Polyurethanschaumstoffe werden die Reaktionskomponenten nach dem an sich bekannten Einstufenverfahren, dem Prepolymerverfahren oder dem Semiprepolymerverfahren zur Umsetzung gebracht, wobei man sich oft maschineller Einrichtungen bedient.

Die Polyurethanschaumstoffe können als Form- oder auch als Blockschaumstoffe hergestellt werden, wobei die Formschaumstoffe heiß- oder auch kalthärtend hergestellt werden können.

Gegenstand der Erfindung sind daher ein Verfahren zur Herstellung der Polyurethanschaumstoffe, die nach diesem Verfahren hergestellten Polyurethanschaumstoffe und deren Verwendung zur Herstellung von Formteilen oder Blockware, sowie die Formteile bzw. die Blockware selbst.

Die nach der Erfindung erhältlichen Polyurethanschaumstoffe finden beispielsweise folgende Anwendung: Möbelpolsterungen, Textileinlagen, Matratzen, Automobilsitze, Kopfstützen, Armlehnen, Schwämme und Bauelemente, sowie Sitz- und Armaturverkleidungen, und können Kennzahlen von 60 bis 250, bevorzugt 70 bis 120, besonders bevorzugt 75 bis 120 und Raumgewichte von 4 bis 600 $kg/m^3$, bevorzugt 60 bis 120 $kg/m^3$ (Weichschaum) bzw. bevorzugt 15 bis 55 $kg/m^3$ (Halbhartschaum) aufweisen.

Unter der Isocyanat-Kennzahl (auch Kennzahl oder Isocyanat-Index genannt) wird der Quotient aus der tatsächlich eingesetzten Stoffmenge [Mol] an Isocyanatgruppen und der tatsächlich eingesetzten Stoffmenge [Mol] an Isocyanat-reaktiven Gruppen, multipliziert mit 100, verstanden:

$$\text{Kennzahl} = (\text{Mole Isocyanatgruppen} / \text{Mole Isocyanat-reaktive Gruppen}) * 100$$

Der NCO-Wert (auch: NCO-Gehalt, Isocyanatgehalt) wird bestimmt mittels EN ISO 11909:2007. Falls nicht anders angegeben, handelt es sich um die Werte bei 25°C.

**Beispiele**

Prüfmethoden:

Druckfestigkeit, Dämpfung und die Rohdichte der Schaumstoffe wurden in Anlehnung an DIN EN ISO 3386-1 in Aufschäumrichtung bestimmt. Die Probenkörper hatten ein Volumen von 5x5x5 $cm^3$. Eine Vorkraft von 2 kPa wurde dabei eingestellt. Die Vorschubgeschwindigkeit betrug 50 mm/min.

Die Hydroxylzahl wurde gemäß DIN 53240-1 in der Fassung von Juni 2013 und die Luftdurchlässigkeit gemäß

DIN EN ISO 7231 in der Fassung von Dezember 2010 bestimmt.

Der Druckverformungsrest wurde gemäß DIN EN ISO 1856 in der Fassung von Januar 2008 mit 75% Druckverformung bei 70°C für 22h gemessen (Verfahren A).

Die Werte für die Zugfestigkeit, Bruchdehnung und Reißfestigkeit wurden gemäß DIN EN ISO 1798 in der Fassung von April 2008 ermittelt.

Bestimmung der Aldehyd-Emissionen (Weiterentwicklung der standardisierten Methode VDA 275 des Verbandes der Deutschen Automobilhersteller mit dem Ziel einer verbesserten Sichtbarkeit von Acetaldehyd wie in WO 2018/104222, Seite 21, Zeile 31 ff beschrieben, auch "mod. Flaschenmethode" genannt):

In eine Glasflasche von einem Liter Volumen werden 25 Milliliter Wasser und 25 Milliliter einer Lösung von 0,3 mmol/Liter Dinitrophenylhydrazin (DNPH) in 3 mM phosphorsaurem Acetonitril gegeben. Der Gehalt an DNPH beträgt 7,5 μmol pro Flasche. Am Deckel wird eine Schaumstoffplatte der Größe 40* 10*4 $cm^3$ frei hängend befestigt. Die Flasche wird verschlossen und 3 Stunden in einen Umlufttrockenschrank bei 65 °C gelagert. Man lässt die Flasche abkühlen, entnimmt den Schaumstoff und analysiert die Zusammensetzung der wässrigen Lösung per LC-MS/MS auf die Hydrazone der angegebenen Aldehyde. Zu jeder Schaumqualität werden drei Flaschen untersucht. Bei jedem Versuchslauf werden drei Flaschen ohne Schaumstoff mit untersucht. Der mittlere Blindwert wird von den Messwerten abgezogen. Auf dieser Basis wird auf die Emission der jeweiligen Aldehyde pro Kilogramm Schaumstoff zurückgerechnet. Die Angabe erfolgt im mg Aldehyd pro kg Schaumstoff.

Messung der flüchtigen organischen Substanzen (VDA 278):

Bei der Messung der VOC- und FOG-Werte erfolgte gemäß der Technischen Regel VDA278 des Verbandes Deutschen Automobilhersteller "Thermodesorptionsanalyse organischer Emissionen zur Charakterisierung von nichtmetallischen Kfz-Werkstoffen" (Stand 1.10.2011). Die Angaben zu VOC Werten nach VDA278 sind in mg Toluoläquivalenten pro kg Schaumstoff. Die Angaben zu FOG Werten nach VDA278 sind in mg Hexadecanäquivalenten pro kg Schaumstoff.

Die Bestimmung des Gehalts an aromatischen Aminen im Schaumstoff erfolgt durch Extraktion mit 0,1%iger Essigsäure nach Skarping (A- Marand, D. Karlsson, M. Dalene, G. Skarping, Analytica Chimica Acta, 2004. 510, 109-119; J. R. Johnson, D. Karlsson, M. Dalene, G. Skarping, Analytica Chimica Acta, 2010. 678 (1), 117-123), jedoch anders als in der angegebenen Literatur ohne anschließende Derivatisierung.

**Beschreibung der Versuche**

Rohstoffe

| | |
|---|---|
| A1.1-1: | Gemisch aus 60 Gew.-Tle. eines Polyalkylenoxids mit einer OH-Zahl von 31 mg KOH/g und 40 Gew.-Tle. eines Polymerpolyols mit einer OH-Zahl von 20 mg KOH/g und einem Feststoffgehalt von 43% |
| A1.1-2: | Glyzerin-gestartetes Alkylenoxid mit OH-Zahl 37 mg KOH/g und >50% Ethylenoxid |
| A1.1-3: | Glyzerin-gestartetes Alkylenoxid mit OH-Zahl 28 mg KOH/g und > 14% Ethylenoxid |
| A1.2-1: | Glyzerin-gestartetes Polypropylenoxid mit OH-Zahl 232 mg KOH/g |
| A1.2-2: | Polypropylenglycol $M_n$ =220 g/mol |
| A3-1: | Katalysator-Mischung aus Niax® A400 (Handelsprodukt der Firma Evonik) und Dabco® 33LV (Handelsprodukt der Firma Evonik) im Verhältnis 4:6 (nach Gewicht) |
| A3-2: | Katalysator-Mischung aus Dabco® NE300 und Dabco® NE500 im Verhältnis 82:18 (nach Gewicht) |
| A3-3: | Schaumstabilisator Tegostab B8736 LF2, Handelsprodukt der Firma Evonik Nutrition & Care, Essen |
| A3-4: | Gemisch von Schaumstabilisatoren der Firma Evonik Nutrition & Care, Essen |
| A2.1-1: | Wasser |
| A2.1-2: | Lösung von Harnstoff in Wasser mit einer Konzentration von 173 g pro Liter |
| A1.3-1: | Diethanolamin |
| B-1: | Desmodur T80, Gemisch aus Isomeren des Toluylendiisocyanates |
| B-2: | Gemisch aus 65% 4,4'-MDI, 6% 2,4'-MDI sowie höheren Homologen und Isomeren des MDI |

Erfindungsgemäße Beispiele für die Komponente **C1** gemäß Formel (I) sind:

| | | | $R^1$ | $R^2$ | $R^3$ |
|---|---|---|---|---|---|
| C-1 | 5-(Hydroxymethyl)-2(*5H*) furanon 114,10 g/mol | 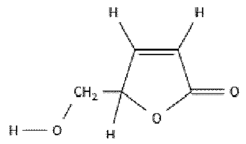 | CH | CH | $CH_2$-OH |
| C-2 | 4-(2-Hydroxyethyl)-2,3 -morpholindion 159,14 g/mol | 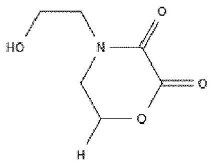 | C(O) | $CH_2$-N-$(CH_2)_2$-OH | H |
| C-3 | 4-(2-Hydroxyproyl)-6-methyl-2,3-morpholindion | 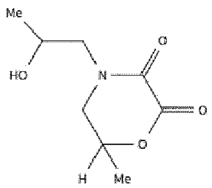 | C(O) | $CH_2$-N-$CH_2$-CHMe-OH | $CH_3$ |

Als erfindungsgemäßes Beispiel für **C2** einem elektrophilen Addukt aus einem dienophilen cyclischen Anhydrid und einem OH-funktionellen Dien wurde Admerginsäure (CAS 6935-55-3) als Komponente C-4 eingesetzt. Admerginsäure ist ein Addukt aus Maleinsäureanhydrid und dem Dien $R^6$-CH=CH-CH=CH-$R^7$-OH ($R^6$ = $C_6H_{13}$, R7 = $C_7H_{14}$-C(O)).

Die Vergleichsbeispiele basieren auf den hydroxyfunktionellen Additiven Hydroxyethylmethacrylat "HEMA" (elektrophil als Aza-Michael-Akzeptor), Hydroxymethylfurfural "HMF" (elektrophil als Aldehyd) und den Anhydriden Bernsteinsäureanhydrid und Methylbernsteinsäureanhydrid. Die genannten Additive sind im Laborfachhandel erhältlich. Die erfindungsgemäßen Komponenten C-1, C-2, C-3 und C-4 werden zum Vergleich in den Beispielen ebenfalls als Additiv bezeichnet.

Die eingesetzten Polyolkomponenten sind wie folgt zusammengesetzt

**Tabelle 1: Zusammensetzungen der Polyolkomponenten A-1 und A-2**

| **Polyolkomponente** | | **A-1** | **A-2** |
|---|---|---|---|
| A1.1-1 | g/kg A | 955,2 | |
| A1.1-2 | g/kg A | | 331,2 |
| A1.1-3 | g/kg A | | 198,0 |
| A1.2-1 | g/kg A | | 379,4 |
| A1.2-2 | g/kg A | | 42,5 |
| A1.3-1 | g/kg A | 7,6 | |
| A2.1-1 | g/kg A | 26,7 | |
| A2.1-2 | g/kg A | | 24,4 |
| A3-1 | g/kg A | 4,8 | |
| A3-2 | g/kg A | | 9,1 |
| A3-3 | g/kg A | 5,7 | |
| A3-4 | g/kg A | | 15,5 |
| Summe | g/kg A | 1000 | 1000 |

Zur Herstellung der Polyurethan-Schaumstoffe werden die notwendigen Mengen der in den Tabellen angegebenen Komponenten mit Ausnahme des Isocyanats in einem Pappbecher mit Blechboden (Volumen: ca. 850ml) vorgelegt und mit einem Rührwerk (Fa. Pendraulik) mit Standardrührscheibe (d = 64 mm) bei 4200 U/min 45 Sekunden lang mit

Luft beladen. Das Additiv kann dabei entweder im Isocyanat enthalten sein (Versuchsreihen 3 bis 5) oder zu den anderen Komponenten ("Polyolkomponente") zugesetzt werden.

Das Isocyanat wird in einen geeigneten Becher eingewogen und wieder entleert (Auslaufzeit: 3 s). Dieser, an den Innenwandungen noch benetzte Becher wird tariert und wieder mit der angegebenen Isocyanatmenge gefüllt. Das Isocyanat wird den anderen Komponenten zugesetzt (Auslaufzeit: 3 s). Die erhaltene Mischung aus Isocyanat und den anderen Komponenten wird mit einem Rührwerk (Fa. Pendraulik) für 5 Sekunden intensiv vermischt. Zur Bildung eines Formschaumstoffes wird das Reaktionsgemisch in eine 23°C warme mit Teflonfolie ausgekleidete Kastenform aus Aluminium mit 4 $dm^3$ Volumen gegossen (Versuchsreihen 1 bis 6). Die Form wird verschlossen und verriegelt. Nach sechs Minuten wird die Verriegelung geöffnet und entspannt. Für die Blockschaumstoffe wurde das Reaktionsgemisch in ein vorbereitetes Papierkästchen mit einem Grundriss von 20 cm x 20 cm x 15 cm überführt (Versuchsreihen 7 bis 9). Die Höhe der Polyurethanweichschaumstoffblöcke betrug ca. 14-15 cm.

**Formschaumstoffe**

Versuchsserie 1: Einsatz des Additivs C-1 in der Polyolkomponente A-1

**Tabelle 2: Emissionsmessungen und mechanische Eigenschaften der Beispiele 1 bis 4**

| **Beispiel** | | **1*** | **2*** | **3*** | **4** |
|---|---|---|---|---|---|
| Additiv | | - | HEMA | HEMA | C-1 |
| A-1 | Gew.-Tle. | 100 | 100 | 100 | 100 |
| Anteil an Additiv[l] | Gew.-Tle. | - | 1,65 | 0,82 | 1,44 |
| Gehalt an Additiv im Schaumstoff | mmol/kg | | 100 | 50 | 100 |
| Isocyanat | | B-1 | B-1 | B-1 | B-1 |
| **Kennzahl** | | 75 | 75 | 75 | 75 |
| Einwaage | g | 266 | 262 | 268 | 263 |
| Liegezeit | s | 5-6 | 5 | 5 | 5 |
| Abbindezeit | s | 58 | 72 | 70 | 66 |
| Steigzeit | s | 93 | 135 | 123 | 110 |
| Zell struktur | | gut | gut | gut | gut |
| Haut | | mittel | mittel | mittel | mittel |
| Ausreaktion und Stabilität | | gut | gut | gut | gut |
| **Mechanische Eigenschaften** | | | | | |
| Druckfestigkeit bei 40% Stauchung | kPa | 5,8 | 5,1 | 5,7 | 6,1 |
| Druckverformungsrest | % | 7,0 | 11,4 | 9,7 | 7,5 |
| Dämpfung | % | 20 | 22 | 21 | 20 |
| Zugfestigkeit | kPa | 153 | 139 | 148 | 158 |
| Bruchdehnung | % | 127 | 145 | 144 | 133 |
| Luftdurchlässigkeit | cfm | 171 | 177 | 185 | 161 |
| **Extraktion mit Essigsäure** | | | | | |
| 2,4-TDA | mg/kg | 0,6 | 0,1 | 0,3 | 9,6 |
| 2,6 TDA | mg/kg | 115 | 75 | 96 | 76 |
| Summe TDA | mg/kg | 116 | 75 | 96 | 86 |
| *Referenz- oder Vergleichsbeispiel<br>[1] Bezogen auf 100 Gew.-Tle. der Komponente A | | | | | |

Die Tabelle 2 zeigt den Vergleich eines Schaumstoffes ohne Additiv zur Emissionsreduktion als Referenzbeispiel gegenüber dem Additiv Hydroxyethylmethacrylat (HEMA) aus dem Stand der Technik. C-1 ist im Rahmen der Messgenauigkeit ebenso gut geeignet, den Gehalt an aromatischen Aminen zu verringern wie HEMA. Anders als mit HEMA beobachtet man aber keine signifikante Verschlechterung der mechanischen Eigenschaften gegenüber dem Schaumstoff des Referenzbeispiels ohne Additiv (Beispiel 1). Insbesondere der Druckverformungsrest der Polyurethanschaumstoffe mit HEMA als Additiv (Beispiele 2 und 3) erhöht sich deutlich gegenüber dem Referenzbeispiel, wohingegen der Polyurethanschaumstoff mit dem erfindungsgemäßen Additiv C-1 im Rahmen der Messgenauigkeit den gleichen Druckverformungsrest aufweist.

Versuchsserie 2 (Vergleich): Einsatz von HMF in der Polyolkomponente

**Tabelle 3: Emissionsmessungen und mechanische Eigenschaften der Beispiele 1 bis 4**

| **Beispiel** | | **5*** | **6*** | **7*** | **8*** | **9*** | **10*** |
|---|---|---|---|---|---|---|---|
| Additiv | | - | HMF | - | HMF | - | HMF |
| A-1 | Gew.-Tle. | 100 | 100 | 100 | 100 | 100 | 100 |
| Anteil an Additiv[1] | Gew.-Tle. | - | 2,4 | - | 2,4 | - | 2,3 |
| Gehalt an Additiv im Schaumstoff | mmol/kg | - | 190 | - | 190 | - | 180 |
| Isocyanat | | B-1 | B-1 | B-1 | B-1 | B-1 | B-1 |
| **Kennzahl** | | 75 | 75 | 90 | 90 | 100 | 100 |
| Einwaage | g | 260 | 252 | 260 | 256 | 252 | 264 |
| **Mechanische Eigenschaften** | | | | | | | |
| Druckfestigkeit bei 40% Stauchung | kPa | 5,5 | 2,4 | 7,1 | 3,5 | 8,5 | 5,7 |
| Druckverformungsrest | % | 7 | 7 | 7 | 73 | 73 | 74 |
| Dämpfung | % | 20 | 31 | 20 | 32 | 21 | 31 |
| Zugfestigkeit | kPa | 138 | 76 | 168 | 94 | 177 | 111 |
| Bruchdehnung | % | 130 | 149 | 112 | 133 | 97 | 112 |
| Luftdurchlässigkeit | cfm | 145 | 158 | 149 | 167 | 159 | 146 |
| **VDA 278** | | | | | | | |
| Summe VOC | mg/kg | 1417 | 1947 | 1111 | 1259 | 1156 | 1279 |
| davon aromatische Amine | mg/kg | 16 | 159 | <1 | 105 | <1 | 29 |
| Summe FOG | mg/kg | 46 | 99 | 14 | 59 | 4 | 33 |

*Referenz- oder Vergleichsbeispiel
[1] Bezogen auf 100 Gew.-Tle. der Komponente A

HMF ist ein hydroxyfunktionelles Elektrophil und strukturell ähnlich zu dem erfindungsgemäßen Additiv C-1. Im Gegensatz zu C-1 weist HMF eine Aldehydgruppe statt einer Carbonylgruppe als elektrophile Gruppe auf und ist somit auch kein Elektrophil gemäß Formel (I) oder (II). In den Beispielen 6, 8 und 10 wurde HMF bei verschiedenen Kennzahlen im Vergleich zu einem Schaumstoff ohne Additiv als Referenz verglichen (Beispiele 5, 7 und 9). Trotz der strukturellen Ähnlichkeit verringert HMF aber nicht die Emissionen an aromatischen Aminen, sondern verstärkt diese noch. Der Zusatz von HMF als hydroxyfunktionelles Elektrophil führt, anders als der Einsatz von C-1, auch noch zu erheblich schlechteren mechanischen Eigenschaften im Vergleich zum Schaumstoff ohne Additiv. Insbesondere die Zugfestigkeit verringert sich deutlich gegenüber den Schaumstoffen aus den Referenzbeispielen.

Versuchsserie 3: Einsatz des Additivs C-2 in der Isocyanatkomponente

**Tabelle 4: Emissionsmessungen der Beispiele 11 und 12**

| **Beispiel** | | **11*** | **12** |
|---|---|---|---|
| Additiv | | - | C-2 |
| **A-1** | Gew.-Tle. | 100 | 100 |
| Anteil an Additiv im Isocyanat | Gew.-% | - | 10 |
| Gehalt an Additiv im Schaumstoff | g/kg | - | 22 |
| | mmol/kg | - | 141 |
| Isocyanat | | B-1 | B-1 |
| **Kennzahl** | | 75 | 75 |
| Einwaage | g | 257 | 253 |
| Liegezeit | s | 6 | 6 |
| Abbindezeit | s | 61 | 75 |
| Steigzeit | s | 103 | 110 |
| Haut | | gut | gut |
| Austriebsstörungen | | nein | nein |
| Ausreaktion und Stabilität | | gut | gut |
| **Essigsäurextraktion** | | | |
| 2,4-TDA | mg/kg | 8,2 | 2,5 |
| 2,6-TDA | mg/kg | 329 | 3 |
| Summe TDA | mg/kg | 337,2 | 5,5 |
| **VDA 278** | | | |
| Summe VOC | mg/kg | 504 | 201 |
| davon aromatische Amine | mg/kg | 80 | 0 |
| Summe FOG | mg/kg | 287 | 51 |
| davon arom. Amine | mg/kg | 208 | 0 |
| *Referenz- oder Vergleichsbeispiel | | | |

Wie in Tabelle 4 gezeigt, kann das erfindungsgemäße Additiv ebenfalls in der Isocyanatkomponente eingesetzt werden. Die Reaktivität der Schaumformulierung in Beispiel 12 ist ähnlich zu dem Referenzbeispiel 11 ohne Additiv. Die Ergebnisse zeigen eine deutliche Eliminierung des Gehalts an TDA im Schaumstoff und der Emission von TDA durch den Einsatz des Additivs C-2.

<u>Versuchsserie</u> 4: Einsatz der Additive C-2 und C-3 in der Isocyanatkomponente

**Tabelle 5: Emissionsmessungen und mechanische Eigenschaften der Beispiele 13 bis 16**

| **Beispiel** | | **13*** | **14** | **15** | **16** |
|---|---|---|---|---|---|
| Additiv | | - | C-2 | C-3 | C-3 |
| **A-1** | Gew.-Tle. | 100 | 100 | 100 | 100 |
| Gehalt an Additiv im Schaumstoff | g/kg | - | 6 | 6 | 10 |
| | mmol/kg | - | 38 | 32 | 65 |

(fortgesetzt)

| **Beispiel** | | **13*** | **14** | **15** | **16** |
|---|---|---|---|---|---|
| Isocyanat | | B-1 | B-1 | B-1 | B-1 |
| **Kennzahl** | | 75 | 75 | 75 | 75 |
| Einwaage | g | 251 | 254 | 243 | 256 |
| Liegezeit | s | 6 | 6 | 6 | 6 |
| Abbindezeit | s | 72 | 66 | 72 | 66 |
| Steigzeit | s | 125 | 130 | 117 | 115 |
| **Mechanische Eigenschaften** | | | | | |
| Rohdichte | $kg/m^3$ | 53,8 | 53,7 | 53,8 | 53,8 |
| Druckfestigkeit bei 40% Stauchung | | 3,5 | 6,4 | 5,5 | 5,6 |
| Druckverformungsrest | | 8,5 | 6,2 | 6,9 | 7,1 |
| Dämpfung | % | 19 | 19 | 19 | 20 |
| **Extraktion mit Essigsäure** | | | | | |
| 2,4-TDA | mg/kg | 1,8 | <0,06 | 0,3 | <0,2 |
| 2,6-TDA | mg/kg | 172 | 15 | 24 | 19 |
| Summe TDA | mg/kg | 173,8 | 15 | 24,3 | 19 |
| **Aldehydemissionen (modifizierte Flaschenmethode)** | | | | | |
| Formaldehyd | | 0,3 | 0,9 | 0,9 | 0,9 |
| Acetaldehyd | | 0,3 | <0,3 | <0,3 | <0,3 |
| Propanal | | 13,4 | 0,3 | 0,7 | 2,2 |
| **VDA278** | | | | | |
| Summe VOC | | 1501 | 367 | 908 | 735 |
| davon arom. Amine | | 6 | 0 | 2 | 0 |
| Summe FOG | | 102 | 55 | 65 | 67 |
| davon arom. Amine | | 19 | 1 | 4 | 2 |
| *Referenz- oder Vergleichsbeispiel | | | | | |

Die Ergebnisse in Tabelle 5 zeigen die gute Eignung der erfindungsgemäßen Additive C-2 und C-3 zur Verringerung von Aminemissionen. Die erfindungsgemäßen Additive führen insgesamt zu einer Reduktion der Emission von flüchtigen organischen Komponenten, z.B. von Aldehyden.

Versuchsserie 5: Einsatz der Additive C-2 und C-3in der Polyolkomponente

**Tabelle 6: Emissionsmessungen und mechanische Eigenschaften beim Einsatz der Additive C-2 und C-3 in der Polyolkomponente**

| **Beispiel** | | **17*** | **18** | **19** |
|---|---|---|---|---|
| Additiv | | - | C-2 | C-3 |
| A-2 | Gew.-Tle. | 100 | 100 | 100 |
| Anteil an Additiv[1] | Gew.-Tle. | - | 0,1 | 0,1 |
| Isocyanat | | B-1 | B-1 | B-1 |

(fortgesetzt)

| Beispiel | | 17* | 18 | 19 |
|---|---|---|---|---|
| Kennzahl | | 75 | 75 | 75 |
| Mechanische Eigenschaften | | | | |
| Rohdichte | kg/m$^3$ | 40 | 40 | 40 |
| Extraktion mit Essigsäure | | | | |
| 2,2'-MDA | mg/kg | 2,9 | 1,4 | 2,0 |
| 2,4'-MDA | mg/kg | 178 | 107 | 141 |
| Summe MDA | mg/kg | 180,9 | 108,4 | 143,0 |
| VDA278 | | | | |
| aromatische Amine (VOC) | mg/kg | 8 | 6 | 4 |
| aromatische Amine (FOG) | mg/kg | 80 | 53 | 39 |
| *Referenz- oder Vergleichsbeispiel<br>[1] Bezogen auf 100 Gew.-Tle. der Komponente A | | | | |

Die Wirkung der erfindungsgemäßen Additive C-2 und C-3 besteht ebenfalls, wenn diese in der Polyolkomponente eingesetzt werden. Beide Additive reduzieren ebenfalls den Anteil und die Emission bei Polyurethanschaumstoffen auf Basis von MDI, im Vergleich mit Polyurethanschaumstoffen ohne Additiv (Beispiel 17).

Versuchsserie 6: Einsatz des Additivs C-4 in der Isocyanatkomponente

**Tabelle 7: Emissionsmessungen und mechanische Eigenschaften beim Einsatz des Additivs C-4 in der Polyolkomponente**

| Beispiel | | 20* | 21 | 22* | 23* | 24* |
|---|---|---|---|---|---|---|
| Additiv | | - | C-4 | HEMA | BSA | Methyl-BSA |
| A-1 | Gew.-Tle. | 100 | 100 | 100 | 100 | 100 |
| Isocyanat | | B-1 | B-1 | B-1 | B-1 | B-1 |
| Anteil an Additiv im Isocyanat | Gew.-% | - | 2 | 2 | 2 | 2 |
| Gehalt an Additiv im Schaumstoff | g/kg | - | 3,79 | 3,82 | 3,74 | 3,73 |
| | mmol/kg | - | 10 | 29 | 37 | 33 |
| Kennzahl | | 75 | 75 | 75 | 75 | 75 |
| Einwaage | g | 258 | 254 | 262 | 263 | 254 |
| Liegezeit | s | 6 | 6 | 6 | 7 | 6 |
| Abbindezeit | s | 70 | 80 | 95 | 80 | 70 |
| Steigzeit | s | 120 | 135 | 122 | 127 | 122 |
| Extraktion mit Essigsäure | | | | | | |
| 2,4-TDA | mg/kg | 0,6 | 0,2 | 0,5 | 0,2 | 0,2 |
| 2,6-TDA | mg/kg | 116 | 2,8 | 111 | 0,7 | 0,6 |
| Total TDA | mg/kg | 116,6 | 3 | 111,5 | 0,9 | 0,8 |

(fortgesetzt)

| Extraktion mit Essigsäure | | | | | | |
|---|---|---|---|---|---|---|
| Unterschied TDA pro Additiv | mmol/mol | Referenz | -93 | -1 | -25 | -29 |
| *Referenz- oder Vergleichsbeispiel | | | | | | |

Die Tabelle 7 zeigt, dass der erfindungsgemäße Formschaumstoff von Beispiel 21 mit dem Additiv C-4 einen deutlich geringeren Anteil an TDA enthält als das Referenzbeispiel 20 ohne Additiv und das Beispiel 22 mit HEMA als Additiv. Die Beispiele 23 und 24 mit Anhydriden als Additive weisen zwar geringere Anteile an TDA auf, liegen jedoch auch in größeren Mengen in der Schaumstoffformulierung vor.

**Blockschaumstoffe**

Versuchsserie 7: Einsatz des Additivs C-1 in der Isocyanatkomponente B-1

**Tabelle 8:Emissionsmessungen und mechanische Eigenschaften der Beispiele 25 bis 28**

| **Beispiel** | | **25*** | **26** | **27** | **28** |
|---|---|---|---|---|---|
| Additiv | | - | C-1 | C-1 | C-1 |
| A-1 | Gew.-Tle. | 100 | 100 | 100 | 100 |
| Anteil an Additiv im Isocyanat | Gew.-% | - | 3 | 5 | 10 |
| Gehalt an Additiv im Schaumstoff | g/kg | - | 6,5 | 11,1 | 24,1 |
| | mmol/kg | - | 57 | 97 | 211 |
| Isocyanat | | B-1 | B-1 | B-1 | B-1 |
| **Kennzahl** | | 75 | 75 | 75 | 75 |
| **Mechanische Eigenschaften** | | | | | |
| Rohdichte | $kg/m^3$ | 43,2 | 42,2 | 39,9 | 40,3 |
| Druckfestigkeit bei 25% Stauchung | kPa | 14,4 | 14,3 | 13,7 | 14,2 |
| Druckfestigkeit bei 40% Stauchung | kPa | 18,4 | 18,7 | 17,3 | 18,2 |
| **VDA 278** | | | | | |
| Summe VOC | mg/kg | 882 | 809 | 709 | 394 |
| davon tert. Amine | mmol/kg | 5,1 | 4,4 | 3,6 | 1,5 |
| Summe FOG | mg/kg | 34 | 25 | 22 | 26 |
| *Referenz- oder Vergleichsbeispiel | | | | | |

Auch in Blockschaumstoffen führt der Einsatz der erfindungsgemäßen Additive zu ähnlich guten mechanischen Eigenschaften wie der Schaumstoff des Referenzbeispiels ohne Additiv. Die Additive können ebenfalls als Bestandteil der Isocyanatkomponente eingesetzt werden und reduzieren sowohl den Anteil an aromatischen Aminen als auch die Gesamtemissionen des Schaumstoffes.

Versuchsserie 8: Einsatz der Additive C-2 und C-3 in der Polyolkomponente

C-2 und C-3 wurden in Wasser gelöst und der Polyolkomponente **A-1** zugesetzt (0,1 g/100 g). Die Additive C-2 und C-3 zeigen ausgezeichnete Aktivität bei der Verringerung der Emissionen an aromatischen Aminen und der Gesamtemission. Dabei haben die erfindungsgemäßen Additive keinen negativen Einfluss auf die mechanischen Eigenschaften der Schaumstoffe.

**Tabelle 9: Emissionsmessungen und mechanische Eigenschaften der Beispiele 29 bis 31**

| **Beispiele** | | **29*** | **30** | 31 |
|---|---|---|---|---|
| Additiv | | - | C-2 | C-3 |
| A-2 | Gew.-Tle. | 100 | 100 | 100 |
| Anteil an Additiv[l] | Gew.-Tle. | - | 0,1 | 0,1 |
| Gehalt an Additiv im Schaumstoff | g/kg | - | 0,77 | 0,77 |
| | mmol/kg | - | 4,8 | 4,1 |
| Isocyanat | | B-1 | B-1 | B-1 |
| **Kennzahl** | | 75 | 75 | 75 |
| **Mechanische Eigenschaften** | | | | |
| Rohdichte | $kg/m^3$ | 47,0 | 48,1 | 47,7 |
| Druckfestigkeit bei 40% Stauchung | kPa | 3,9 | 4,6 | 4,3 |
| Druckverformungsrest 75%/22h/70°C | % | 5,8 | 4,8 | 4,8 |
| Zugfestigkeit | kPa | 159 | 160 | 155 |
| Reißdehnung | % | 151 | 148 | 146 |
| **VDA278** | | | | |
| Summe VOC | mg/kg | 970 | 594 | 727 |
| davon aromatische Amine | mg/kg | 94 | 13 | 22 |
| Summe FOG | mg/kg | 321 | 134 | 162 |
| davon aromatische Amine | mg/kg | 182 | 34 | 52 |
| *Referenz- oder Vergleichsbeispiel<br>[1] Bezogen auf 100 Gew.-Tle. der Komponente A | | | | |

Versuchsserie 9: Einsatz des Additivs C-2 in der Polyolkomponente

**Tabelle 10: Emissionsmessungen und mechanische Eigenschaften der Beispiele 32 bis 35**

| **Beispiel** | | **32*** | **33** | **34** | 35 |
|---|---|---|---|---|---|
| Additiv | | - | C-2 | C-2 | C-2 |
| A-2 | | 100 | 100 | 100 | 100 |
| Gehalt an Additiv im Schaumstoff | g/kg | - | 0,6 | 1,2 | 3,0 |
| | mmol/kg | - | 3,8 | 7,6 | 19,1 |
| Isocyanat | | B-2 | B-2 | B-2 | B-2 |
| **Kennzahl** | | 85 | 85 | 85 | 85 |
| Steigzeit | s | 180 | 180 | 190 | 190 |
| **Mechanische Eigenschaften** | | | | | |
| Rohdichte | $kg/m^3$ | 47,7 | 48,8 | 48,6 | 48,9 |
| Druckfestigkeit bei 40% Stauchung | kPa | 1,7 | 1,6 | 1,7 | 1,7 |
| Druckverformungsrest | % | 2,2 | 1,7 | 1,8 | 1,7 |
| Zugfestigkeit | kPa | 102 | 95 | 93 | 94 |

(fortgesetzt)

| | | | | | |
|---|---|---|---|---|---|
| **Mechanische Eigenschaften** | | | | | |
| Reißdehnung | % | 149 | 155 | 159 | 159 |
| Luftdurchlässigkeit | cfm | 100 | 70 | 200 | 130 |
| **Extraktion mit Essigsäure** | | | | | |
| 2,2'-MDA | mg/kg | <0,06 | <0,06 | <0,06 | <0,06 |
| 2,4'-MDA | mg/kg | 1,1 | 1 | 0,7 | 0,8 |
| 4,4'-MDA | mg/kg | 1,9 | 1,7 | 1,3 | 1,4 |
| Total MDA | mg/kg | 3,0 | 2,7 | 2,0 | 2,2 |
| *Referenz- oder Vergleichsbeispiel | | | | | |

Auch in Blockschaumstoffen auf Basis von MDI reduziert das erfindungsgemäße Additiv C-2 den Gehalt an aromatischen Aminen. Die Schaumstoffe der Beispiele 33 bis 35 mit dem erfindungsgemäßen Additiv zeigen dabei ähnliche mechanische Eigenschaften wie der Schaumstoff des Referenzbeispiels 32 ohne Additiv.

## Patentansprüche

1. Verfahren zur Herstellung von Polyurethan-Schaumstoff, wobei die Komponenten

   **A** enthaltend

   **A1** Verbindungen mit gegenüber Isocyanat reaktionsfähigen Wasserstoffatomen,
   **A2** Treibmittel
   und gegebenenfalls
   **A3** Hilfs- und Zusatzstoffe wie

   a) Katalysatoren,
   b) oberflächenaktive Zusatzstoffe,
   c) Pigmente und/oder Flammschutzmittel

   und

   **B** Di- und/oder Polyisocyanaten,
   miteinander umgesetzt werden, **dadurch gekennzeichnet, dass** mindestens in einer der Komponenten **A** oder **B** eine Komponente **C** umfasst, enthaltend

   **C1** ein Elektrophil gemäß der Formel (I) enthaltend ist

   $$R^1\text{-C(O)-O-CHR}^2R^3 \qquad (I)$$

   wobei

   $R^1$ und $R^2$ miteinander verbunden sind und ein 5- oder 6-gliedriger Ring gebildet wird,
   $R^1$ und $R^2$ jeweils unabhängig voneinander für einen substituierten oder unsubstituierten $C_1$- bis $C_8$-Kohlenwasserstoffrest stehen,
   $R^3$ für H oder einen substituierten oder unsubstituierten $C_1$- bis $C_8$-Kohlenwasserstoffrest steht, und mindestens eine exozyklische OH-Gruppe an $R^1$, $R^2$ oder $R^3$ gebunden ist,

   oder
   **C2** ein electrophiles Addukt aus einem dienophilen cyclischen Anhydrid und einem OH-funktionellen Dien.

2. Verfahren gemäß Anspruch 1, **dadurch gekennzeichnet, dass** in Formel (I)

$R^1$ für -CH=, -C($R^4$)($R^5$)- oder -C(=O)- steht,
$R^2$ für -CH=, -C($R^4$)($R^5$)-, -CH($R^4R^5$)-, -$CH_2$-N($R^4R^5$)-,
$R^3$ für H oder -$R^6$-$R^5$,
$R^4$ für H oder $C_1$- bis $C_8$-Alkylrest steht,
$R^5$ für H oder OH steht,
R6 für $C_1$- bis $C_8$-Alkylrest steht.

3. Verfahren gemäß Anspruch 1 oder 2, **dadurch gekennzeichnet, dass** das Addukt aus einem dienophilen cyclischen Anhydrid und einem OH-funktionellen Dien eine Verbindung ist, ausgewählt aus der Gruppe bestehend aus Umsetzungsprodukten einer konjugiert doppelt ungesättigten $C_{10}$-$C_{20}$ Carbonsäure mit einem ungesättigten Anhydrid, insbesondere Maleinsäureanhydrid, sowie Ester und Esterether dieser Umsetzungsprodukte, insbesondere maleinierte Fettsäuren wie Admerginsäure und ihre Derivate.

4. Verfahren gemäß Anspruch 1, **dadurch gekennzeichnet, dass** die Komponente C mindestens eine Verbindung enthält ausgewählt aus der Gruppe bestehend aus 5-(Hydroxymethyl)-2(5H)furanon, 4-(2-Hydroxyethyl)-2,3-morpholindion, 4-(2-Hydroxyproyl)-6-methyl-2,3-morpholindion und Copolymere des 5-(Hydroxymethyl)-2(5H)furanons, 2,3- und 2,5-Morpholinedions und seiner Derivate mit Alkylenoxiden, 1,4-Dioxanonen und 1,4-Dioxandionen, sowie Umsetzungsprodukte einer konjugiert doppelt ungesättigten C10-C20 Carbonsäure mit einem ungesättigten Anhydrid.

5. Verfahren gemäß einem der Ansprüche 1 bis 4, **dadurch gekennzeichnet, dass** die Einsatzmenge der Komponente C 0,01 bis 10 Gew.-%, bevorzugt 0,05 bis 5 Gew.-%, jeweils bezogen auf das Gesamtgewicht der Komponenten **A, B** und **C.**

6. Verfahren gemäß einem der Ansprüche 1 bis 5, **dadurch gekennzeichnet, dass** die Komponente A die folgenden Komponenten umfasst:

**A1** Verbindungen mit gegenüber Isocyanaten reaktionsfähigen Wasserstoffatomen, enthaltend

**A1.1** 29,0 bis 98,5 Gew.-Teile (bezogen auf die Summe der Gew.-Teile aller Komponenten A = 100 Gew.-Teile) gegenüber Isocyanaten reaktionsfähigen Wasserstoffatomen aufweisenden Verbindungen mit einer NH- und/oder OH-Zahl gemäß DIN 53240-1 in der Fassung von Juni 2013 von 20 bis < 120 mg KOH/g,
**A1.2** 0 bis 60 Gew.-Teile (bezogen auf die Summe der Gew.-Teile aller Komponenten A = 100 Gew.-Teile) gegenüber Isocyanaten reaktionsfähigen Wasserstoffatomen aufweisenden Verbindungen mit einer NH- und/oder OH-Zahl gemäß DIN 53240-1 in der Fassung von Juni 2013 von 120 bis < 600 mg KOH/g,
**A1.3** 0 bis 10 Gew.-Teile (bezogen auf die Summe der Gew.-Teile aller Komponenten A = 100 Gew.-Teile) gegenüber Isocyanaten reaktionsfähigen Wasserstoffatomen aufweisenden Verbindungen mit einer NH- und/oder OH-Zahl gemäß DIN 53240-1 in der Fassung von Juni 2013 von 600 bis 4000 mg KOH/g,

**A2** Treibmittel, enthaltend

**A2.1** 0,1 bis 10 Gew.-Teile (bezogen auf die Summe der Gew.-Teile aller Komponenten A = 100 Gew.-Teile) chemische Treibmittel,
**A2.2** 0 bis 15 Gew.-Teile (bezogen auf die Summe der Gew.-Teile aller Komponenten A = 100 Gew.-Teile) physikalische Treibmittel,

**A3** 0,5 bis 15 Gew.-Teile (bezogen auf die Summe der Gew.-Teile aller Komponenten A = 100 Gew.-Teile) Hilfs- und Zusatzstoffe.

7. Verfahren gemäß einem der Ansprüche 1 bis 6, wobei als Di- und/oder Polyisocyanat-Komponente (Komponente **B**) eine Diphenylmethandiisocyanat-Mischung, bestehend aus

a) 45 bis 90 Gew.-% 4,4'-Diphenylmethandiisocyanat und
b) 10 bis 55 Gew.-% 2,2'-Diphenylmethandiisocyanat und/oder 2,4'-Diphenylmethandiiso-cyanat und
c) 0 bis 45 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine,

verwendet wird.

**8.** Verfahren gemäß einem der Ansprüche 1 bis 7, wobei Komponente A mindestens eine der Verbindungen Ethanolamin oder Diethanolamin enthält.

**9.** Polyurethane, bevorzugt Polyurethanschaumstoffe, erhältlich nach einem Verfahren gemäß einem der Ansprüche 1 bis 8.

**10.** Polyurethane, bevorzugt Polyurethanschaumstoffe, gemäß Anspruch 9 mit einem Raumgewicht von 4 bis 600 $kg/m^3$ (Polyurethanweichschaumstoff bzw. Halbhartschaumschaumstoff), bevorzugt 60 bis 120 $kg/m^3$ (Polyurethanweichschaumstoff), bzw. bevorzugt 15 bis 55 $kg/m^3$ (Halbhartschaumschaumstoff).

**11.** Verwendung der Polyurethane, bevorzugt Polyurethanschaumstoffe, gemäß Anspruch 9 oder 10 zur Herstellung von Möbelpolsterungen, Textileinlagen, Matratzen, Automobilsitzen, Kopfstützen, Armlehnen, Schwämmen, Dachhimmeln, Türseitenverkleidungen, Sitzauflagen oder Bauelementen.

**12.** Verwendung einer Komponente C zur Reduktion von Emissionen, enthaltend

**C1** ein Elektrophil gemäß der Formel (I) enthaltend ist

$$R^1\text{-C(O)-O-CHR}^2R^3 \qquad (I)$$

wobei

$R^1$ und $R^2$ miteinander verbunden sind und ein 5- oder 6-gliedriger Ring gebildet wird,
$R^1$ und $R^2$ jeweils unabhängig voneinander für einen substituierten oder unsubstituierten $C_1$- bis $C_8$-Kohlenwasserstoffrest stehen,
$R^3$ für H oder einen substituierten oder unsubstituierten $C_1$- bis $C_8$-Kohlenwasserstoffrest steht, und mindestens eine exozyklische OH-Gruppe an $R^1$, $R^2$ oder $R^3$ gebunden ist,

oder
**C2** ein electrophiles Addukt aus einem dienophilen cyclischen Anhydrid und einem OH-funktionellen Dien.

Europäisches Patentamt
European Patent Office
Office européen des brevets

# EUROPÄISCHER RECHERCHENBERICHT

Nummer der Anmeldung
EP 21 15 1813

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 199 19 826 A1 (BASF AG [DE]) 2. November 2000 (2000-11-02) * Schaumstoff 4; Ansprüche 1, 2; Beispiel 1; Tabelle 1 * ----- | 1-12 | INV. C08G18/48 C08G18/32 C08G18/66 C08G18/76 C08G18/67 C08G18/28 |
| X<br>A | US 2004/003995 A1 (ANDERSON ALBERT G [US] ET AL) 8. Januar 2004 (2004-01-08) * Ansprüche 1, 5; Beispiel 3 * * Absatz [0001] * ----- | 12<br>1-11 | |
| | | | RECHERCHIERTE SACHGEBIETE (IPC) |
| | | | C08G |

Der vorliegende Recherchenbericht wurde für alle Patentansprüche erstellt

1

| Recherchenort | Abschlußdatum der Recherche | Prüfer |
|---|---|---|
| München | 29. Juni 2021 | Ojea Jimenez, Isaac |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 21 15 1813

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-06-2021

| Im Recherchenbericht angeführtes Patentdokument | Datum der Veröffentlichung | Mitglied(er) der Patentfamilie | Datum der Veröffentlichung |
|---|---|---|---|
| DE 19919826 A1 | 02-11-2000 | AT 309284 T | 15-11-2005 |
| | | AU 4748300 A | 17-11-2000 |
| | | DE 19919826 A1 | 02-11-2000 |
| | | DK 1187865 T3 | 30-01-2006 |
| | | EP 1187865 A1 | 20-03-2002 |
| | | ES 2252001 T3 | 16-05-2006 |
| | | WO 0066643 A1 | 09-11-2000 |
| US 2004003995 A1 | 08-01-2004 | AT 377034 T | 15-11-2007 |
| | | AU 2003267985 A1 | 23-01-2004 |
| | | BR 0312319 A | 12-04-2005 |
| | | CA 2489155 A1 | 15-01-2004 |
| | | CN 1665858 A | 07-09-2005 |
| | | EP 1517938 A1 | 30-03-2005 |
| | | JP 2005532457 A | 27-10-2005 |
| | | MX PA04012417 A | 19-04-2005 |
| | | TW 200402447 A | 16-02-2004 |
| | | US 2004003995 A1 | 08-01-2004 |
| | | US 2005187314 A1 | 25-08-2005 |
| | | WO 2004005366 A1 | 15-01-2004 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19919826
- DE 19928676
- DE 10343099
- DE 19928687
- WO 2018104222 A


### In der Beschreibung aufgeführte Nicht-Patentliteratur


- *Thermodesorptionsanalyse organischer Emissionen zur Charakterisierung von nichtmetallischen Kfz-Werkstoffen,* 01. Oktober 2011
- *CHEMICAL ABSTRACTS,* 6935-55-3